# EUROPEAN PATENT SPECIFICATION

(11) **EP 2 611 302 B1**
(45) Date of publication and mention of the grant of the patent: **18.02.2015**
(21) Application number: 11755193.7
(22) Date of filing: 30.08.2011
(51) Int. Cl.: A01N 65/00, A01P 1/00

(54) **INHIBITION OF BIOFILM FORMATION AND REMOVAL OF BIOFILM BY USE OF MOSS**
HEMMUNG DER BIOFILM-BILDUNG UND ENTFERNUNG VON BIOFILM DURCH VERWENDUNG VON MOOS
INHIBITION DE FORMATION DE BIOFILM ET ÉLIMINATION DE BIOFILM À L'AIDE DE MOUSSE

(30) Priority: 30.08.2010 US 378232 P
(43) Date of publication of application: 10.07.2013
(73) Proprietor: Embro Corporation, St. Louis Park, MN 55416 (US)
(72) Inventor: FIEGEL, Vance, Shakopee Minnesota 55379 (US); KNIGHTON, David, Minneapolis Minnesota 55410 (US)
(74) Representative: Freyria Fava, Cristina
(86) International application number: PCT/US2011/049697
(87) International publication number: WO 2012/030802

(56) References cited:
- WO-A1-2006/109078
- WO-A2-2005/102935

## Description

This application claims the benefit of U.S. Provisional Application No. 61/378,232, filed August 30, 2010, entitled "Inhibition of Biofilm Formation and Removal of Biofilm by Use of Moss.

### Field of the Invention

This invention relates to methods of removing of biofilm using moss. Sphagnum moss is preferred.

### Background of the Invention

The accumulation of biofilm in artificial water systems creates numerous and significant problems. Depending on the specific system, these problems include health and infection issues, increased maintenance expenses, and significant operating inefficiencies. Mitigation or removal of biofilm from within these systems is difficult and typically requires the use of harsh and toxic chemicals.

Previous studies have demonstrated that sphagnum moss significantly inhibits the growth of free-floating (planktonic) bacteria. See U.S. Patent No. 7,497,947 B2 and U.S. Patent Application Publication No. 2006/0032124 A1. WO-A-2006/109078 discloses compounds effective in detaching biofilms from surfaces. "Sphagnum moss" is a generic expression that designates a range of botanical species that co-exist in a sphagnous bog. It should be noted that "peat moss" refers generally to a decomposed or composted sphagnum moss. Sphagnum moss is commonly harvested for use in various products. The petals, and not the stems, of the moss preferably may be harvested. Typically large pieces of plant material (roots, twigs, etc.) are removed. Water is removed from the slurry and the moss is dried. The moss may be compressed prior to packaging or shipment. Various additives may be used to alter the absorption characteristics or mechanical properties of the moss. Because sphagnum moss is readily available and relatively inexpensive, it has been used in a variety of products, primarily for the absorption of fluids.

There is need in the art for products that inhibit and remove biofilms.

### Summary of the Invention

The description discloses a method of inhibiting biofilm growth on a surface in an aqueous system comprising contacting a surface susceptible to biofilm growth with a solution comprising an amount of a non-decomposed moss or non-decomposed moss extract effective to inhibit biofilm growth. The invention, as claimed in the appended claims, provides a method of removing biofilm from a surface in an aqueous system comprising contacting a surface having a biofilm with a solution containing an amount of a non-decomposed moss or non-decomposed moss extract effective to remove some or all of the biofilm from the surface. The solution can be prepared and added to a system or prepared *in situ* by placing the moss in an aqueous system, especially by placing the moss in a carrier which is then placed in the aqueous system.

It is to be understood that both the foregoing general description and the following detailed description are exemplary and explanatory and are intended to provide further explanation of the invention as claimed.

### Brief Description of the Drawings

FIG. 1 shows the ability of aqueous moss extracts (MX) to inhibit biofilm formation in the MBEC assay.
FIG. 2 shows the dose response effect of aqueous moss extracts to inhibit or remove biofilm in the MBEC assay.
FIG. 3 shows a time course study of aqueous moss extracts to inhibit or remove biofilm in the MBEC assay.
FIG. 4 shows MBEC assays of size filtration fractions of moss extracts.
FIG. 5 shows the average OD of pyocyanin extracted from PAO1 cultures grown in dilutions of Tryptic Soy Broth (TSB) or various concentrations of moss extract.
FIG. 6 shows the average OD of pyocyanin extracted from PAO1 cultures grown in dilutions of Tryptic Soy Broth (TSB) or various concentrations of moss extract.

### Detailed Description of the Preferred Embodiments

In this invention, moss can be used to remove biofilm. In preferred embodiments, the moss is enclosed or encapsulated in a mesh material that prevents the moss from disintegrating in an aqueous environment. Preferred mesh materials include those comprising polymers such as nylon or polypropylene, with mesh sizes ranging from about 0.1 to 1 mm. Polymers are generally preferred because they are inexpensive and may be resistant to degradation.

Suitable for use in this invention are S. papillosum, which can be harvested from bogs in northern Minnesota, U.S.A., and S. cristatum, which is commercially available as a compressed board from Sutton's Moss of Dobson, Westland, New Zealand. These species of moss can be used by themselves or together in the devices and systems of this invention. Typically and preferably the moss is cleaned to remove small particles, such as dirt, and larger debris, such as roots and leaves. Commercially available moss may be fumigated before it is packaged by a manufacturer in order to destroy seeds.

In a preferred embodiment, the moss is cut by mechanical means into a desired size and shape. The moss preferably is then sterilized by autoclaving, exposure to ethylene oxide, or by other means known to one of skill in the art. Sterilization destroys living organisms in the moss and thus avoids any problems of undesirable or foreign bacteria being introduced into the environment where a device of this invention is used. The moss is then ready for use.

The disclosure discloses a method - not part of the present invention - of inhibiting biofilm growth on a surface in an aqueous system comprising contacting a surface susceptible to biofilm growth with a solution comprising an amount of a non-decomposed moss or non-decomposed moss extract effective to inhibit biofilm growth. The moss or moss extract can be selected from the group consisting of sphagnum papillosum, sphagnum cristatum, and mixtures thereof.

The moss can be in the form of leaves or parts of leaves and can be in the form of compressed leaves or parts of leaves. The amount of non-decomposed moss or non-decomposed moss extract is effective to inhibit biofilm growth by 30 percent or more after 48 hours. The amount of non-decomposed moss or non-decomposed moss extract is effective to inhibit biofilm growth by 50 percent or more after 48 hours. The amount of non-decomposed moss or non-decomposed moss extract is effective to inhibit biofilm growth by 70 percent or more after 48 hours. In an embodiment, the percent inhibition is measured by crystal violet staining.

The invention provides a method of removing biofilm from a surface in an aqueous system comprising contacting a surface having a biofilm with a solution containing an amount of a non-decomposed moss or non-decomposed moss extract effective to remove some or all of the biofilm from the surface. The moss or moss extract can be selected from the group consisting of sphagnum papillosum, sphagnum cristatum, and mixtures thereof.

The moss can be in the form of leaves or parts of leaves and can be in the form of compressed leaves or parts of leaves. In one embodiment, the amount of non-decomposed moss or non-decomposed moss extract is effective to remove biofilm by 30 percent or more after 48 hours. In another embodiment, the amount of non-decomposed moss or non-decomposed moss extract is effective to remove biofilm by 50 percent or more after 48 hours. In one embodiment, the amount of non-decomposed moss or non-decomposed moss extract is effective to remove biofilm by 70 percent or more after 48 hours. In an embodiment, the percent removal is measured by crystal violet staining.

The solution can be prepared and added to a system or prepared *in situ* by placing the moss in an aqueous system, especially by placing the moss in a carrier which is then placed in the aqueous system. The carrier can be a polymer matrix, a biomatrix, membrane, gel, or hydrogel. The moss can be enclosed within a mesh bag.

The moss can be compressed and can be in the form of strips. The moss can be sterilized by autoclaving, sterilized by chemical treatment, or sterilized by treatment with ethylene oxide. The moss can be washed with an acidic solution, especially a solution of acetic acid. The moss can be washed with an acidic solution and then washed with a salt solution. The aqueous system can be any system containing water. The water can be in a spa, swimming pool, aquarium, splash deck, water tower, holding tank, pond, cooling tower, water bottle, or toilet.

The moss can be prepared by (i) drying non-decomposed moss; and (ii) sterilizing the moss. The method can further comprising compressing the moss, compressing the moss and cutting the moss into strips, sterilizing the moss by autoclaving, chemical treatment, or treatment with ethylene oxide. The moss can be sphagnum moss. The moss can be selected from the group consisting of sphagnum papillosum, sphagnum cristatum, and mixtures thereof.

The moss can be prepared by (i) contacting non-decomposed moss with an acidic solution; and (ii) drying the moss. The method can comprise contacting the non-decomposed moss with a salt solution after step (i). In one embodiment, the acidic solution is a solution of acetic acid. The moss can be sphagnum moss. The moss can be selected from the group consisting of sphagnum papillosum, sphagnum cristatum, and mixtures thereof.

### EXAMPLES

### Materials and Methods

### Materials

Two strains of Pseudomonas aeruginosa were obtained from ATCC, Manassas, Virginia, USA: 700888 and BAA-47 (PAO1). All cultures were grown and maintained in Bacto tryptic soy broth (TSB, Becton, Dickinson and Company, Franklin Lakes, New Jersey, USA). Sphagnum moss (S. cristatum) was obtained from Sutton's Moss, New Zealand.

### Moss Extracts

Aqueous moss extracts (MX) were made by soaking moss (1g/20mls) in 25% TSB for 2 hrs. The liquid MX was extracted from the moss by vacuum filtration, the pH adjusted to 7.0, and filter sterilized. MX undiluted (1/1) or diluted to various concentrations in 25% TSB was used for testing as described below.

### MBEC Assay

The 96 well MBEC High-Throughput (HTP) Assay system from Innovotech, Edmonton, Alberta, Canada, was used to grow and analyze biofilms. For biofilm inhibition studies, 135 ul TSB samples were added to wells of the 96 well plate along with 15 ul inoculum and the plate was covered with the pegged lid. The biofilms were cultured on an orbital shaker for 24 hrs unless otherwise stated. For biofilm removal studies, 150 ul TSB inoculum was added per well and biofilms were grown for 24 hrs, the pegs were then transferred to the sample plate and incubated for another 24 hrs. After incubation the pegs were rinsed and stained with 0.1 % crystal violet, solubilized in MeOH and read with a plate reader at 550 nm. Percent inhibition of biofilm formation or percent removal of biofilm was calculated from the average O.D. values of treated wells compared to control wells.

### Determination of Pyocyanin in Cultures

Dilutions of MX or control media were inoculated with PAO1 and cultured overnight at 30 degrees C in T25 flasks with shaking. After 24 hrs, 5 ml of culture media was mixed in tubes with 3 ml of chloroform and vortexed for 30 seconds. The tubes were centrifuged for 5 min and the bottom chloroform layer was read on a spectrophotometer at 690nm for pyocyanin detection.

### Example 1

Extracts were created in aqueous solution using Sphagnum cristatum as described above. A standard inoculum of P. aeruginosa (ATCC 700888) was prepared and used to create biofilm on the pegs of 96-well MBEC plates. The MBEC High-Throughput (HTP) Assay was produced by Innovotech Inc., Edmonton, Alberta, Canada and the assay was conducted substantially according to the instructions for use, which are incorporated by reference herein. A copy of the instructions for use can be found in U.S. Provisional Application No. 61/378,232, filed August 30, 2010. Various concentrations of filter-sterilized extract were prepared and added to the MBEC assay. The plates were incubated at 30C on a shaker. Biofilm determinations were made 24 and 48 hours after inoculation using crystal violet staining with subsequent methanol extraction and quantification of staining on a plate reader. The results demonstrated significant inhibition of biofilm formation at both the 24 and 48 hour time points.

Table 1 below shows the effect of sphagnum moss on biofilm formation at the 24 hour time point and Table 2 shows the effect of sphagnum moss on biofilm formation at the 48 hour time point. Tables 1 and 2 show the treatment (sphagnum moss mg/ml), average optical density (OD), standard deviation (SDn), and percent inhibition.

**Table 1**

| Treatment (mg/ml) | AverageOD | SDn | % Inhibition |
|---|---|---|---|
| SM 50 | 0.07 | 0.02 | 61.32 |
| SM 25 | 0.07 | 0.02 | 60.86 |
| SM 10 | 0.10 | 0.02 | 44.92 |
| SM 5 | 0.11 | 0.02 | 38.86 |
| Control | 0.18 | 0.06 | |

**Table 2**

| Treatment (mg/ml) | AverageOD | SDn | % Inhibition |
|---|---|---|---|
| SM 50 | 0.06 | 0.02 | 84.26 |
| SM 25 | 0.07 | 0.01 | 83.64 |
| SM 10 | 0.22 | 0.07 | 46.40 |
| SM 5 | 0.29 | 0.08 | 28.52 |
| Control | 0.41 | 0.08 | |

The results above demonstrated significant inhibition of biofilm formation at both the 24 and 48 hour time points. Sphagnum moss extracts were capable of maximally inhibiting the accumulation of biofilm up to 61% and 84% at the 24 and 48 hour time points, respectively. This inhibition was dose dependent with the inhibitory effect maintained over the 48 hour time period.

### Example 2

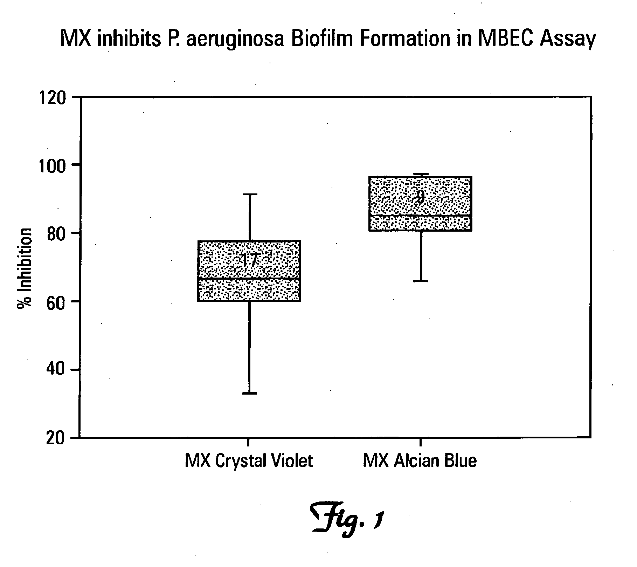

Data shown in FIG. 1 demonstrate the ability of MX to inhibit biofilm formation in the MBEC assay. 1/1 MX was added at the initiation of PA 700888 biofilm formation in the MBEC assay. Biofilm content was analyzed after 24 hours. Data is expressed as % inhibition vs. control. Repeated experiments with PA 700888 showed that MX inhibited biofilm formation, on average, by 65% vs. control when stained with crystal violet (cellular content) and by 86% when stained with alcian blue (matrix content).

### Example 3

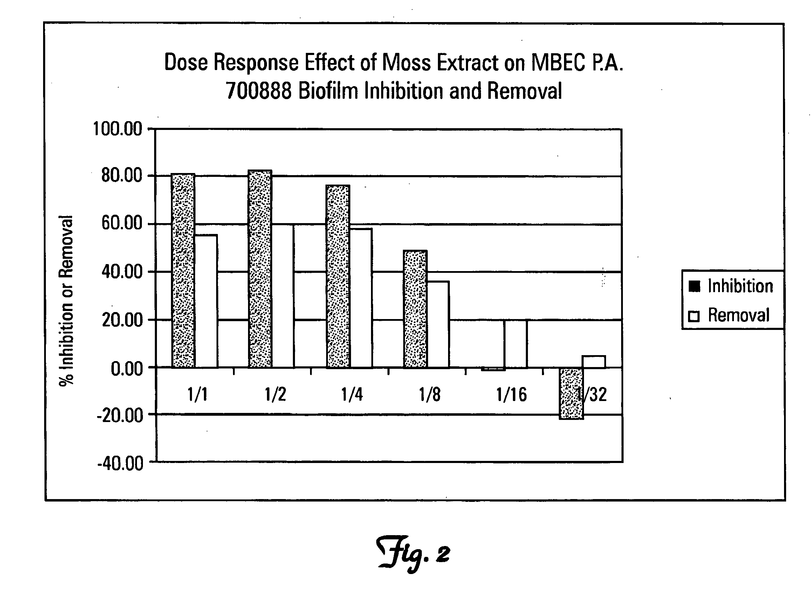

As shown in FIG. 2, various concentrations of MX were added at the initiation of biofilm formation or to an established biofilm in the MBEC assay. Biofilm content was analyzed by crystal violet staining 24 hours after addition of MX. Data is expressed as % inhibition vs. control or as % removal vs. control. Results from the dose response studies shown in FIG. 2 show a dose dependent effect of MX on biofilm formation and on removal of an established biofilm.

### Example 4

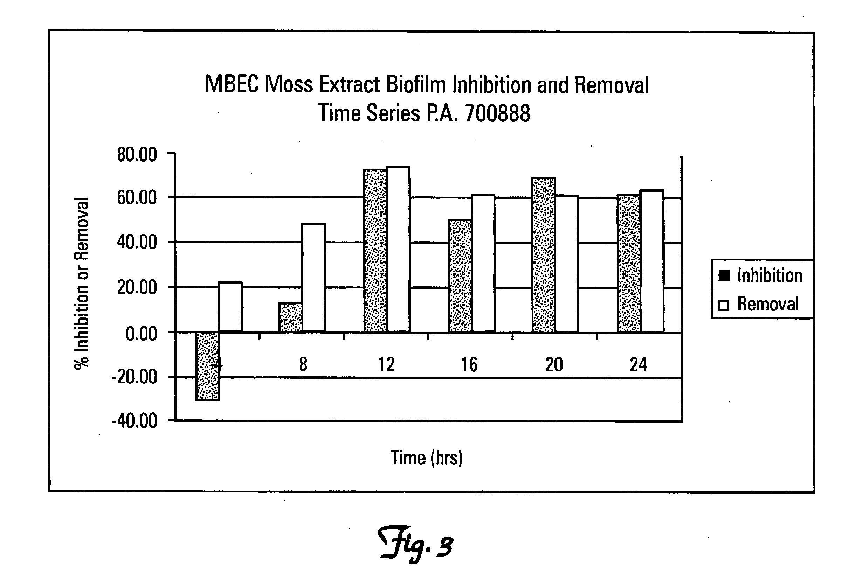

As shown in FIG. 3, 1/1 MX was added at the initiation of biofilm formation or to an established biofilm in the MBEC assay. Biofilm content was analyzed by crystal violet staining at various times after addition of MX. Data is expressed as % inhibition vs. control or as % removal vs. control. Time course studies shown in FIG. 3 demonstrate that both biofilm inhibition and removal by MX builds over 12 hrs. Inhibition and removal peak at 12 hrs and remain level.

### Example 5

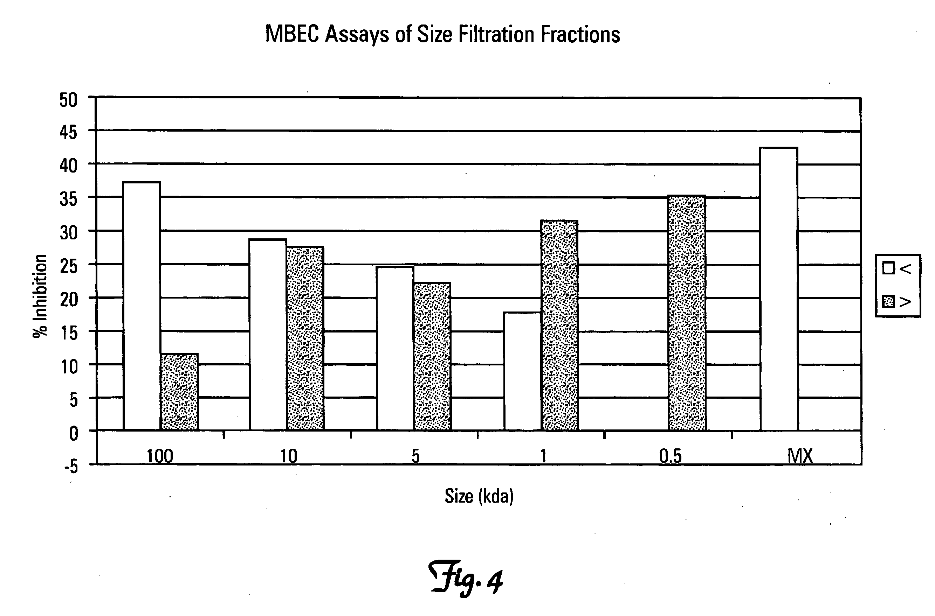

FIG. 4 shows MBEC assays of size filtration fractions of moss extracts. Size fractions of 100, 10, 5, 1, and 0.5 kda were made and tested in the MBEC assay as in Example 1. In FIG. 4, the shaded bar indicates the result for the fraction above the size limit and the unshaded bar indicates the result for the fraction below the size limit.

### Example 6

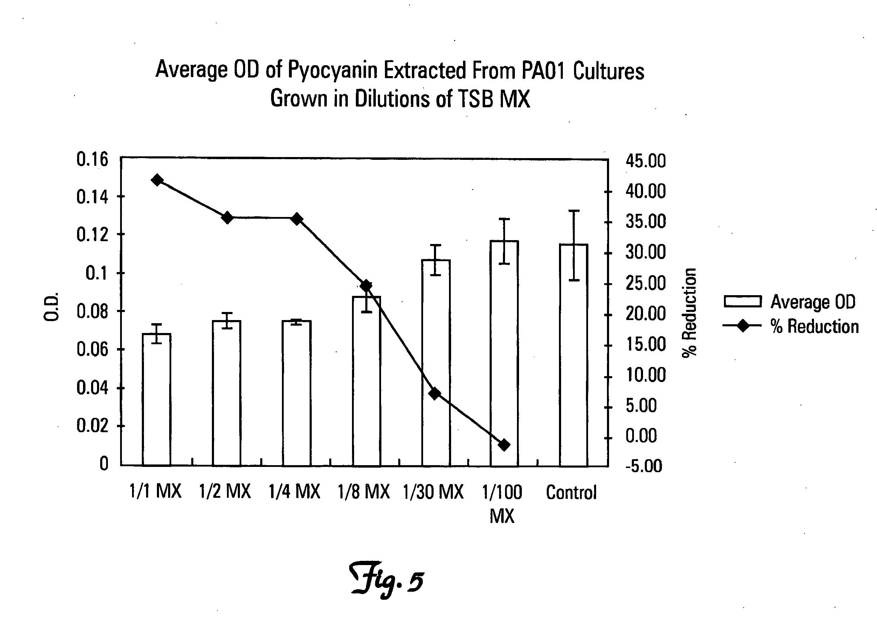

FIG. 5 shows the average OD of pyocyanin (a virulence factor produced by Pseudomonas aeruginosa) extracted from PAO1 cultures grown in dilutions of Tryptic Soy Broth (TSB). The percent reduction of pyocyanin is also shown. The results were measured at the 24 hour time point. The results used to generate FIG. 5 are shown below in Table 3.

**Table 3**

| Dilution | Sample | OD | Dup OD | Average OD | SDn |
|---|---|---|---|---|---|
| 1/1 | 1/1 MX | 0.0711 | 0.0643 | 0.0677 | 0.005 |
| 1/2 | 1/2 MX | 0.072 | 0.0774 | 0.0747 | 0.004 |
| 1/4 | 1/4 MX | 0.0741 | 0.0755 | 0.0748 | 0.001 |
| 1/8 | 1/8 MX | 0.0822 | 0.093 | 0.0876 | 0.008 |
| 1/30 | 1/30 MX | 0.1129 | 0.1019 | 0.1074 | 0.008 |
| 1/100 | 1/100 MX | 0.1255 | 0.1087 | 0.1171 | 0.012 |
| | Control | 0.1284 | 0.1024 | 0.1154 | 0.018 |

### Example 7

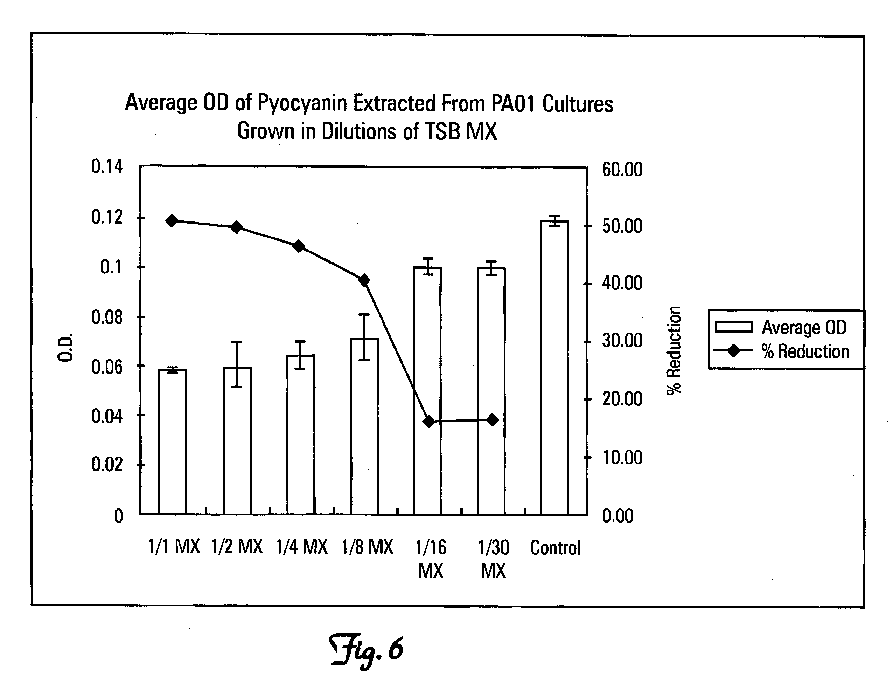

Example 7 is a repeat of the experiment of Example 6. As shown in FIG. 6, the effect of MX dose on pyocyanin production by PAO1 was measured. Pyocyanin is a virulence factor believed to have a role in biofilm formation. PAO1 was grown in the presence of various concentrations of MX and the pyocyanin levels determined spectrophotometrically (FIG. 6). PAO1 grown in the presence of MX demonstrated a dose dependent reduction in pyocyanin.

When dilutions of MX were mixed directly with purified pyocyanin (Sigma P0046), there was no reduction of pyocyanin pigment by MX, indicating the MX is not directly reducing the pyocyanin. Cultures grown on MX agar plates also showed a reduction in pyocyanin pigment vs. control.

The following conclusions were reached. First, extracts of sphagnum moss inhibit P. aeruginosa biofilm formation and facilitate removal of P. aeruginosa biofilms. Second, the inhibition of biofilm formation and removal of established biofilm is dose and time dependent. Third, biochemical studies indicate that the inhibitory activity is probably due to a combination of multiple chemical compounds. Fourth, inhibition of biofilm by sphagnum moss extracts may involve the modulation of virulence factors, such as pyocyanin, that play a role in the control of the biofilm phenotype. Fifth, the use of a natural, plant-based inhibitor of biofilm may be a useful alternative to the use of harsh and toxic methods.

## Claims

1. A method of removing biofilm from a surface in an aqueous system comprising contacting a surface having a biofilm with a solution comprising an amount of a non-decomposed moss or non-decomposed moss extract, wherein the solution is effective to remove some or all of the biofilm from the surface.

2. The method of claim 1, wherein the solution comprises a non-decomposed moss.

3. The method of claim 2, wherein the non-decomposed moss is in the form of leaves or parts of leaves.

4. The method of claim 3, wherein the non-decomposed moss is in the form of compressed leaves or parts of leaves.

5. The method of claim 2, wherein the non-decomposed moss is placed in a carrier.

6. The method of claim 5, wherein the carrier is a mesh bag.

7. The method of claim 1, wherein the solution is a non-decomposed moss extract.

8. The method of claim 1, wherein the aqueous system is a spa, swimming pool, aquarium, splash deck, water tower, holding tank, pond, cooling tower, water bottle, or toilet.

9. The method of claim 1, wherein the solution is prepared and then contacted with the surface.

10. The method of claim 2, wherein the solution is prepared in situ by placing non-decomposed moss in the aqueous system.

11. The method of claim 1, wherein the amount of non-decomposed moss or non-decomposed moss extract is effective to remove biofilm by 30 percent or more after 48 hours.

12. The method of claim 1, wherein the amount of non-decomposed moss or non-decomposed moss extract is effective to remove biofilm by 50 percent or more after 48 hours.

13. The method of claim 1, wherein the amount of non-decomposed moss or non-decomposed moss extract is effective to remove biofilm by 70 percent or more after 48 hours.

14. The method of claim 12, wherein the percent removal is measured by crystal violet staining.

15. The method of claim 1, wherein the moss or moss extract is selected from the group consisting of sphagnum papillosum, sphagnum cristatum, and mixtures thereof.

## Patentansprüche

1. Verfahren zum Entfernen eines Biofilms von einer Oberfläche in einem wässrigen System, umfassend das Inkontaktbringen einer Oberfläche, die einen Biofilm aufweist, mit einer Lösung, die eine Menge eines nicht-zersetzten Mooses oder Extrakts von nicht-zersetztem Moos umfasst, wobei die Lösung zum Entfernen von einem Teil des Biofilms oder dem gesamten Biofilm von der Oberfläche wirksam ist.

2. Verfahren nach Anspruch 1, wobei die Lösung ein nicht-zersetztes Moos umfasst.

3. Verfahren nach Anspruch 2, wobei das nicht-zersetzte Moos in Form von Blättern oder Teilen von Blättern vorliegt.

4. Verfahren nach Anspruch 3, wobei das nicht-zersetzte Moos in Form von zusammengepressten Blättern oder Teilen von Blättern vorliegt.

5. Verfahren nach Anspruch 2, wobei das nicht-zersetzte Moos in einem Träger platziert wird.

6. Verfahren nach Anspruch 5, wobei der Träger ein Netzbeutel ist.

7. Verfahren nach Anspruch 1, wobei die Lösung ein Extrakt von nicht-zersetztem Moos ist.

8. Verfahren nach Anspruch 1, wobei das wässrige System eine Mineralquelle bzw. ein Whirlpool, ein Schwimmbecken, ein Aquarium, Wasserspiele, ein Wasserturm, ein Haltetank bzw. Fäkalienbehälter bzw. Lagerbehälter, ein Teich, ein Kühlturm, eine Wasserflasche oder eine Toilette ist.

9. Verfahren nach Anspruch 1, wobei die Lösung hergestellt und dann mit der Oberfläche in Kontakt gebracht wird.

10. Verfahren nach Anspruch 2, wobei die Lösung durch Platzieren von nicht-zersetztem Moos in dem wässrigen System in situ hergestellt wird.

11. Verfahren nach Anspruch 1, wobei die Menge des nicht-zersetzten Mooses oder Extrakts von nicht-zersetztem Moos zum Entfernen von 30 Prozent oder mehr eines Biofilms nach 48 Stunden wirksam ist.

12. Verfahren nach Anspruch 1, wobei die Menge des nicht-zersetzten Mooses oder Extrakts von nicht-zersetztem Moos zum Entfernen von 50 Prozent oder mehr eines Biofilms nach 48 Stunden wirksam ist.

13. Verfahren nach Anspruch 1, wobei die Menge des nicht-zersetzten Mooses oder Extrakts von nicht-zersetztem Moos zum Entfernen von 70 Prozent oder mehr eines Biofilms nach 48 Stunden wirksam ist.

14. Verfahren nach Anspruch 12, wobei der Prozentsatz der Entfernung durch Kristallviolett-Färbung gemessen wird.

15. Verfahren nach Anspruch 1, wobei das Moos oder der Moosextrakt ausgewählt ist aus der Gruppe bestehend aus Sphagnum papillosum, Sphagnum cristatum und Mischungen davon.

## Revendications

1. Procédé d'élimination de biofilm d'une surface dans un système aqueux comprenant la mise en contact d'une surface ayant un biofilm avec une solution comprenant une quantité d'une mousse non décomposée ou d'un extrait de mousse non décomposée, dans lequel la solution est efficace pour éliminer une partie ou la totalité du biofilm de la surface.

2. Procédé selon revendication 1, dans lequel la solution comprend une mousse non décomposée.

3. Procédé selon revendication 2, dans lequel la mousse non décomposée est sous la forme de feuilles ou de parties de feuilles.

4. Procédé selon revendication 3, dans lequel la mousse non décomposée est sous la forme de feuilles ou de parties de feuilles comprimées.

5. Procédé selon revendication 2, dans lequel la mousse non décomposée est placée dans un support.

6. Procédé selon revendication 5, dans lequel le support est un sac en filet.

7. Procédé selon revendication 1, dans lequel la solution est un extrait de mousse non décomposée.

8. Procédé selon revendication 1, dans lequel le système aqueux est un spa, une piscine, un aquarium, une surface exposée aux projections d'eau, un château d'eau, un réservoir de stockage, un étang, un tour de refroidissement, une bouteille d'eau, ou des toilettes.

9. Procédé selon revendication 1, dans lequel la solution est préparée et ensuite mise en contact avec la surface.

10. Procédé selon revendication 2, dans lequel la solution est préparée in situ en plaçant une mousse non décomposée dans le système aqueux.

11. Procédé selon revendication 1, dans lequel la quantité de mousse non décomposée ou d'extrait de mousse non décomposée est efficace pour éliminer 30 pour cent ou plus d'un biofilm après 48 heures.

12. Procédé selon revendication 1, dans lequel la quantité de mousse non décomposée ou d'extrait de mousse non décomposée est efficace pour éliminer 50 pour cent ou plus d'un biofilm après 48 heures.

13. Procédé selon revendication 1, dans lequel la quantité de mousse non décomposée ou d'extrait de mousse non décomposée est efficace pour éliminer 70 pour cent ou plus d'un biofilm après 48 heures.

14. Procédé selon revendication 12, dans lequel le pourcentage d'élimination est mesuré par coloration au cristal violet.

15. Procédé selon revendication 1, dans lequel la mousse ou l'extrait de mousse est choisi(e) dans le groupe constitué de sphagnum papillosum, de sphagnum cristatum, et de mélanges de ceux-ci.
